(19) Europäisches Patentamt / European Patent Office / Office européen des brevets

(11) **EP 4 361 751 A1**

(12) **EUROPEAN PATENT APPLICATION**

(43) Date of publication:
**01.05.2024 Bulletin 2024/18**

(21) Application number: **22204510.6**

(22) Date of filing: **28.10.2022**

(51) International Patent Classification (IPC):
**G05D 1/00** (2024.01)    **F16M 11/00** (2006.01)
**B64C 39/02** (2023.01)

(52) Cooperative Patent Classification (CPC):
**B64C 17/00; B64U 30/20; F16M 11/00;**
**G05B 19/042; G05D 1/49; G05D 1/672;**
B64U 10/13; B64U 2101/26; G05D 2105/89;
G05D 2109/254

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **DRB S.R.L.**
**20900 Monza (MB) (IT)**

(72) Inventors:
• **PIAZZA, Diego**
  **20845 Sovico (MB) (IT)**
• **MENA, Giuseppe**
  **25032 Chiari (BS) (IT)**

(74) Representative: **De Gregori, Antonella et al**
**BIRD & BIRD SOCIETA TRA AVVOCATI S.R.L.**
**Via Porlezza, 12**
**20123 Milano (IT)**

(54) **STABILISING DEVICE OF A LOAD CARRIED BY A DRONE**

(57)    A device (1) for stabilising the attitude of a load (3) carried by a drone (2) along a space horizontal axis (x-x), the drone having a lower surface (20) wherein a connection seat (21) is obtained at a drone vertical axis $(z_0-z_0)$ passing through its centre of gravity, the stabilising device (1) comprising:
- a tilting connecting element (4), configured to tilt about its own transverse axis (y-y), having a load end (41) and a stabilising end (42), opposite to the load end (41), and configured to be attached to the drone at the drone (2) connection seat (21), and to be arranged in a tilting plane (P), passing through the space horizontal axis (x-x) and the drone vertical axis $(z_0-z_0)$, with its own transverse axis (y-y) orthogonal to the tilting plane (P) and to be rigidly attached, at its load end (41), to a corresponding attachment end (52) of a load (3) supporting arm (5), also arranged along the tilting plane (P), the load (3) being mounted on the load supporting arm (5) at the free end (51) of the load supporting arm (5); and
- a stabilising arm (6), rigidly attached to the tilting connecting element (4) at its stabilising end (42), arranged in the tilting plane (P) and configured to balance the weight of the supporting arm (5) and the load (3);
whereby, when the stabilising device (1) is connected to the drone 2, and is also connected to the load (3) by means of the supporting arm (5), and the drone moves forward along the horizontal axis (x-x) and varies its attitude by making a rotation about its own pitch axis $(y_0-y_0)$, the tilting connecting element (4) rotates about its own transverse axis (y-y) by a corresponding angle while maintaining substantially unchanged the attitude of the stabilising arm (6) and thus also of the load (3) attached thereto, by means of the tilting connecting element (4) and the supporting arm (5).

Fig. 2

**Description**

The present invention relates in general to the control of the attitude of a load carried as cantilevered by a drone, when, in other words, the drone is in a horizontal attitude, the load is not carried by the drone along a drone vertical axis passing through its centre of gravity and therefore tends to unbalance the horizontal attitude of the drone during flight. The present invention relates, in particular, to the control of the attitude of a load carried by a drone while performing so-called NDT (i.e., non destructive testing) contact measurements, i.e., wherein the drone is used to carry a measuring instrument in flight, at an object to be measured, and to keep it in contact with that object, by exerting a fit-for-purpose pressure, while performing the measurement.

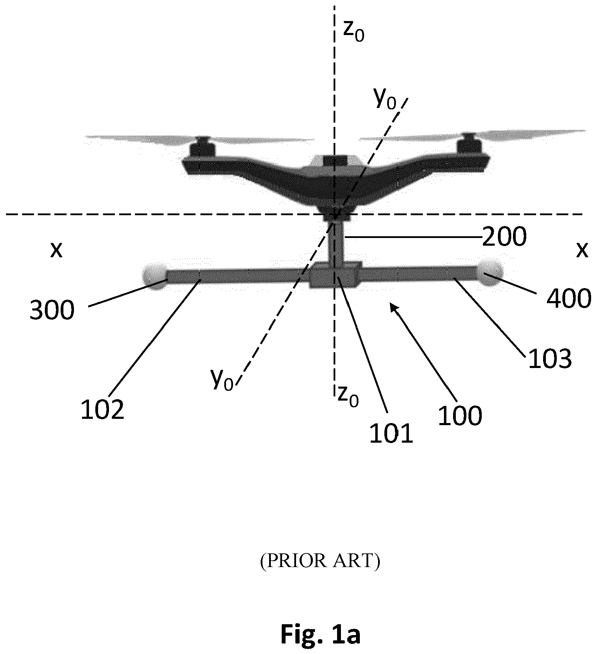

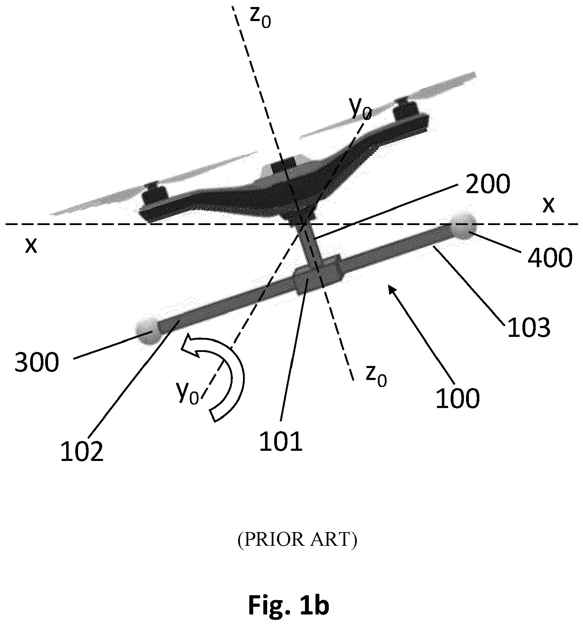

Currently, as shown in Figures 1a and 1b, the drones used in this field are equipped with a longitudinal support 100 rigidly attached below the body of the drone, e.g. by means of a joint 200 extending along a vertical axis zo-zo of the drone passing through its centre of gravity. The longitudinal support 100 is mounted as cantilevered with respect to the joint 200, at a central portion 101 thereof, and carries, at one end 102 thereof, a load 300 (e.g., the measuring instrument) and, at the opposite end 103, a counterweight 400, so that the assembly formed by the joint 200, the longitudinal support 100, the load 300 and the counterweight 400 are substantially balanced when the drone is in a horizontal attitude.

With such a configuration, when the drone needs to move forward or backward along a direction horizontal to the ground, e.g. along a horizontal axis x-x represented in the aforesaid Figures, it must temporarily change its horizontal attitude by making a rotation about its transverse pitch axis $y_0$-$y_0$ which is orthogonal to both its horizontal movement axis x-x and its vertical axis $y_0$-$y_0$, and the total inertia of the system consisting of the drone, joint 200, longitudinal support 100, load 300 and counterweight 400 varies considerably, since the motion of the drone is transmitted to the load 300 and counterweight 400 rigidly attached to the drone by the joint 200 and longitudinal support 100.

Changing the horizontal attitude of the drone during its horizontal movement causes some inconveniences. First of all, it triggers a pendulum movement of the entire system, caused by the drone attitude control system, making it difficult to manoeuvre the drone and, in the case the load 300 is a measuring instrument, to use the measuring instrument itself. In addition, when the drone must keep the measuring instrument in contact with the object to be measured, and must therefore exert a pressure on that object by moving towards it, the change in the drone horizontal attitude is hindered by the constraint caused by the contact of the measuring instrument with the object, and this triggers abnormal behaviours in the drone attitude control and consequently makes it further difficult to manoeuvre it.

Besides, nowadays, drones intended for NDT measurement are products specifically configured for the type of measuring instrument they have to carry, as the longitudinal support 100 rigidly attached to the drone by the joint 200 must be correctly dimensioned together with the counterweight 400 to balance the whole system and keep it in balance. It is clear that replacing the measuring instrument 300 with another instrument of a different size and weight would cause an unbalancing of the system making it difficult, as described above, to maintain the attitude and to manoeuvre the drone.

There is therefore a need to improve the prior art in the field of transporting loads carried as cantilevered by drones, particularly in the field of NDT measurements with drones, and the object of the present invention is to enable the aforementioned drawbacks to be solved or at least mitigated.

These and still other objects of the present invention are achieved by a stabilising device according to claim 1 and by a method of controlling the attitude of a load carried by a drone by the aforesaid stabilising device according to claim 9. The dependent claims recite preferred and advantageous embodiments of the invention.

The present invention will now be described, for illustrative but nonlimiting purposes, according to preferred embodiments thereof, with particular reference to the enclosed figures, wherein:

Figures 1a and 1b show a schematic view of a drone for NDT measurements according to the prior art, in a horizontal attitude configuration and in an initial forward-movement configuration along a horizontal direction, respectively;
Figure 2 schematically shows a first embodiment of a stabilising device according to the present invention, provided with a propulsion unit shown in a working configuration, the stabilising device being mounted on a conventional drone together with a load carried by the respective supporting arm;
Figure 3 is a schematic view, not to scale, of the stabilising device of Figure 2, wherein the propulsion unit is represented in another working configuration, and wherein the components of the resultant of the propulsive forces generated by that propulsion unit in the second working configuration are represented;
Figure 4 shows a second embodiment of the stabilising device of the present invention;
Figure 5 shows the stabilising device of Figure 4 and an NDT measuring device that can be connected to it, in particular a high-voltage electrical insulator meter connected to a robotic support arm; and
Figure 6 is a schematic representation of the assembly supported by a drone, comprising a load and stabilising arm according to the invention and all forces acting on the assembly.

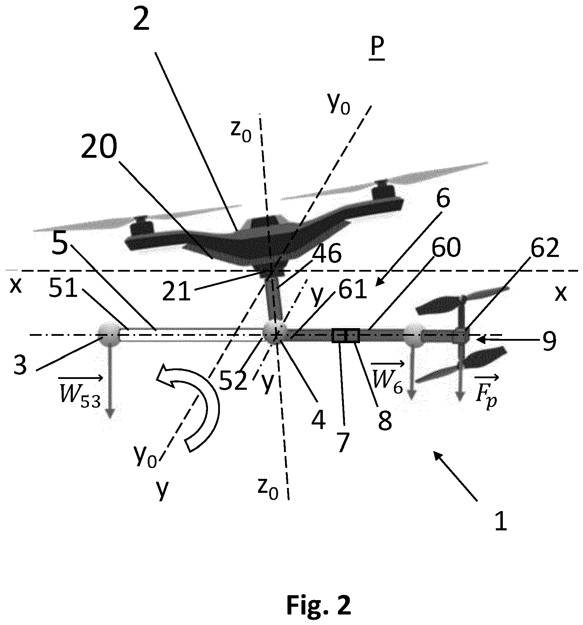

Referring in particular to the appended Figures, it may be observed that a stabilising device according to the present invention is generally referred to by number 1 and is advantageously employed to stabilise the attitude of a load 3 carried by a drone 2 along a space horizontal axis (x-x), the load 3 being mounted as cantilevered with respect to a drone vertical axis zo-zo passing through its centre of gravity and thus constituting an inertial mass which tends to unbalance it during flight. The drone 2 has a lower surface 20 wherein a connection seat 21 is obtained for connecting, in a cantilevered fashion, the load 3. The connection seat 21 is typically obtained at the drone vertical axis (zo-zo) passing through its centre of gravity, as shown for example in Figure 2.

The stabilising device 1 of the present invention comprises at least one connecting element 4, tilting about its own transverse axis (y-y), having a load end 41 and a stabilising end 42, opposite to the load end 41. The connecting element 4 is configured to be connected to the main body of the drone 2 at its connection seat 21, and to be arranged in a tilting plane P, which passes through the drone horizontal axis (x-x) and the vertical axis (zo-zo), with its transverse axis (y-y) orthogonal to the tilting plane P. The tilting connecting element 4 is also configured to be rigidly attached, at its load end 41, to a corresponding attachment end 52 of a supporting arm 5, also configured to be arranged along the tilting plane (P) and supporting the load 3 at its free end 51.

The stabilising device 1 of the present invention further comprises a stabilising arm 6 rigidly attached to the tilting connecting element 4 at its stabilising end 42. Like the load 3 supporting arm 5, the stabilising arm 6 is also configured to be arranged in the tilting plane and to balance the weight of the supporting arm 5 and load 3. Obviously, the stabilising arm 6 must be configured in terms of weight and size in such a way that its weight force balances the weight force of the supporting arm 5 and load 3.

With such a configuration, the person skilled in the art will have no difficulty in understanding that, when the drone 2 moves forward along the space horizontal axis (x-x) and temporarily varies its attitude by making a rotation about its transverse pitch axis ($y_0$-$y_0$), as depicted in Figure 2, the tilting connecting element 4 rotates about its own transverse axis (y-y) by a corresponding angle, and thus reduces at least partially the impact on the drone of the inertia of the assembly formed by the supporting arm 5, load 3, connecting element 4 and stabilising arm 6. Thereby, the attitude control system of the drone 2 does not trigger the pendulum movement of the entire system described above, and the attitude of the assembly supported by the drone 2 stays substantially or nearly unchanged in its horizontal attitude.

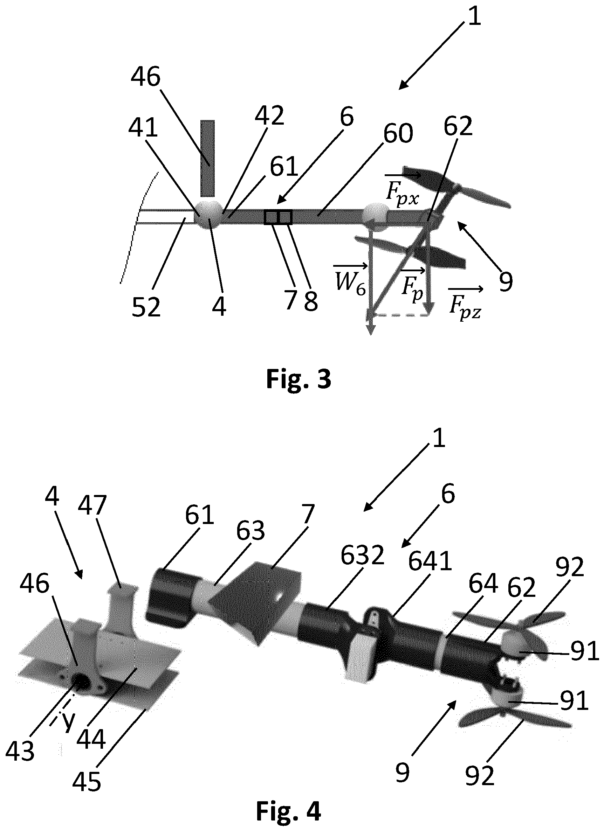

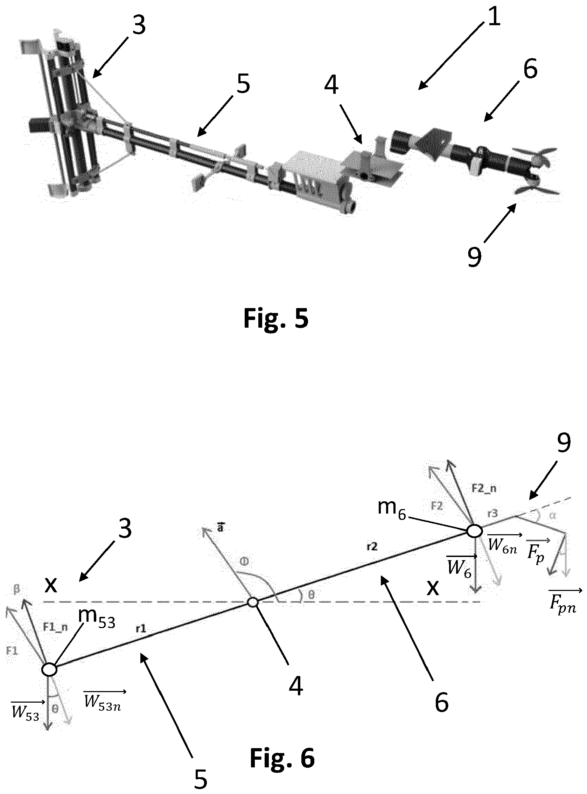

According to a particularly advantageous aspect of the invention, the stabilising device 1 of the present invention also comprises a detection unit 7 (visible in Figures 4 and 5), mounted on the stabilising arm 6 and configured to detect the attitude of the stabilising arm 6 and output at least one detection signal $s_d$. According to a preferred embodiment of the invention, the detection unit 7 comprises an inertial unit or IMU provided with at least one gyroscope and three accelerometers, optionally integrated with a Kalman filter, configured to estimate the position of the stabilising arm 6 with respect to the transverse axis y-y of the tilting connecting element 4 and, consequently, the position of the whole assembly formed by the supporting arm 5, load 3, the tilting connecting element 4 and the stabilising arm 6 and provide a corresponding output detection signal $s_d$.

The stabilising device 1 of the present invention also comprises at least one control and data processing unit 8, mounted on the stabilising arm 6 and operatively connected to the detection unit 7, the control and data processing unit 8 being configured to receive and process the at least one detection signal $s_d$ and output the at least one attitude control signal $s_c$ of the stabilising arm 6 and, consequently, of the assembly formed by the supporting arm 5, load 3, tilting connecting element 4 and stabilising arm 6.

The stabilising device 1 of the present invention advantageously also comprises at least one propulsion unit 9, mounted on the stabilising arm 6 and operatively connected to the at least one control and data processing unit 8, the propulsion unit 9 being configured to receive as input the at least one control signal $s_c$ and to generate a corresponding propulsive force $\overrightarrow{F_p}$ which helps to control the attitude of the stabilising arm 6 and consequently of the assembly formed by the supporting arm 5, load 3, tilting connecting element 4 and stabilising arm 6.

According to a first embodiment of the stabilising arm 6 of the stabilising device 1 of the invention, see in particular Figures 2 and 3, the stabilising arm 6 comprises a single longitudinal section 60, on which the detection unit 7 and the control and data processing unit 8 are mounted, the longitudinal section 60 having a first end 61 attached to the stabilising end 42 of the tilting connecting element 4, and a second end 62, on which the propulsion unit 9 is mounted by means of an articulated joint. The propulsion unit 9 is advantageously pivoted on the second end 62 of the longitudinal section 60, optionally about a pivot axis parallel to the transverse axis (y-y) of the tilting connecting element 4. According to alternative embodiments of the invention (not shown in the Figures), the propulsion unit 9 may be connected to the second end 62 of the stabilising arm 6 by means of an articulated joint, optionally spherical, and is capable of moving relative to the longitudinal section 60 of the stabilising arm 6 according to two or more degrees of freedom.

According to a second embodiment of the stabilising arm 6 of the stabilising device 1 of the invention, see in particular Figures 4 and 5, the stabilising arm 6 comprises a first section 63, having a first end 61 and a second end 632, wherein the first section 63 is attached to the stabilising end 42 of the tilting connecting element 4, at its first end 61, and supports the detection unit 7 and the control and data processing unit 8 (not shown in Figures 4 and 5). The stabilising arm 6 also comprises a second section 64, having a first end 641 and a second end 62, wherein the second section 64 is pivoted on the second end 632 of the first section 63, at its first end 641, and is configured to move relative to the first section 63 according to at least one degree of freedom, optionally about a pivot axis parallel to the transverse axis (y-y) of the tilting connecting element 4, and supports the propulsion unit 9 which is in turn pivoted or rigidly attached to the second section 64 at its second end 62 (in Figures 4 and 5, the propulsion unit 9 is shown rigidly fixed to the second end 62.

In both the embodiments described above, the propulsion unit 9 comprises at least one drive unit 91 of any suitable type, optionally a brushless servomotor, or stepper motor, and at least one propeller thruster 92 connected in any suitable manner to the at least one drive unit 91 (two drive units 91 are shown in the figures, each connected to the respective propeller thruster 92). The drive unit 91 is configured to rotate the propeller thruster 92 connected thereto in response to the control signal $s_c$, optionally a voltage control signal of the drive unit 91, transmitted by the control and data processing unit 8.

In such a configuration, when the propulsion unit 9 is controlled by the control and data processing unit 8, it may generate or vary the propulsive force $\vec{F_p}$ produced by the propulsion unit 9, which contributes, together with the weight force $\vec{W_6}$ of the stabilising arm 6, to control the attitude of the stabilising arm 6 and thus also of the load 3 attached thereto, by means of the tilting connecting element 4 and the supporting arm 5.

In this regard, Figure 6 schematically represents, purely by way of example, the assembly supported by the drone, formed by the supporting arm 5, load 3, tilting connecting element 4 and stabilising arm 6, complete with all the forces acting during the movement of the drone 2 in the horizontal direction x-x. In the centre of the Figure, an acceleration $\vec{a}$ upwards, inclined by an angle $\phi$ with respect to the horizontal axis x-x, that is due to the movement of the drone, is shown at the tilting connecting element 4. The stabilising arm 6 is assumed to be inclined by an angle $\vartheta$ relative to the same horizontal axis x-x . The Figure also shows the inertia forces $F_1$ and $F_2$ parallel to the acceleration direction, with their normal components $F_{1n}$ and $F_{2n}$. In addition, the weight forces $\vec{W_{53}}$ of the supporting arm 5 and load 3 and stabilising arm $\vec{W_6}$ with the components normal to their respective arms $\vec{W_{53n}}$ and $\vec{W_{6n}}$ are indicated. The angle $\beta$ is the angle between the normal to the axis of the respective arms and the acceleration direction a of the drone:

$$\beta = \varphi - \vartheta - \pi/2$$

Finally, the propulsive force $\vec{F_p}$ produced by the propulsion unit 9, with the normal force $\vec{F_{pn}}$ and the angle of inclination of the propulsion unit $\alpha$ about the transverse axis parallel to the pivot axis y-y of the tilting connecting element 4.

Under the conditions shown above, the torques of the forces acting with respect to the pivot axis y-y of the tilting connecting element 4 are:

$$M_{Fpn} = F_{pn}(r_2 + r_3) \cos \alpha$$

$$M_{W53n} = m_{53} g r_1 \cos \vartheta$$

$$M_{F1n} = m_{53} a r_1 (\sin \varphi - \vartheta \cos \varphi)$$

$$M_{W6n} = m_6 g r_2 \cos \vartheta$$

$$M_{F2n} = m_6 a r_2 (\sin \varphi - \vartheta \cos \varphi)$$

where g is the acceleration of gravity, $m_{53}$ is the total mass of the supporting arm 5 and load 3, $m_6$ is the mass of the stabilising arm 6, r1 is the length of the arm of action of the weight force, $\vec{W_{53}}$r2 is the length of the arm of action of the weight force, $\vec{W_6}$ and r3 is the distance of the arm of action of the propulsive $\vec{F_p}$ force produced by the propulsion unit 9.

If we assume that cos $\vartheta$ = 1 and sin $\theta$ = $\vartheta$ for very small values of $\vartheta$, i.e. we assume that the assembly is substantially horizontal, and if we further assume that (r2 + r3) = r2 i.e. that the second section 64 of the stabilising arm 6 has zero length, i.e., that the propulsion unit 9 is substantially connected to the second end 632 of the first section 63 of the stabilising arm 6, or that the stabilising arm 6 is made according to the first embodiment and comprises only one longitudinal section 60, then the balance equation of the inertial system is:

$$MW_{53n} - M_{F1n} + M_{F2n} - M_{6n} - M_{Fpn} = m_{53}r^2\ddot{\vartheta} + m_6 r^2 \ddot{\vartheta}$$

which can be rewritten as

$$m_{53}g\frac{r1}{r2} - m_{53}a\frac{r1}{r2}\sin\emptyset - m_6 g + m_6 a \sin\emptyset +$$

$$\vartheta\left(m_{53}a\frac{r1}{r2}\cos\emptyset - m_6 a\cos\emptyset\right) - \ddot{\vartheta}\left(m_{53}\frac{r1^2}{r2} + m_{53}r2\right) = F_p\cos\alpha$$

gathered and simplified in:

$$A + B\vartheta - C\ddot{\vartheta} = F_p\cos\alpha$$

$$\ddot{\vartheta} = \left(-F_p + A + B\vartheta\right)\frac{1}{C}$$

It is possible to obtain from this equation via the Laplace transform, the transfer function of the system, in a way known to the person skilled in the art:

$$C\ddot{\vartheta} - B\vartheta = F_p - A = K_m V$$

$$\vartheta(s)(Cs^2 - B) = K_m V(s)$$

$$\frac{\vartheta(s)}{V(s)} = \frac{K_m}{s^2 - B} = \frac{\frac{K_m}{C}}{s^2 - \frac{B}{C}}$$

where the contribution $-F_p + A$ is the component of momentum independent of $\vartheta$, which instead depends on the force exerted by the propulsion system, simplified through a constant $K_m$ which multiplies the voltage V applied to the propulsion unit itself.

Once the transfer function is obtained, known PID control techniques may be used to keep the stabilising arm 6 and consequently the whole assembly in a substantially horizontal attitude, for example by sending a suitable voltage control signal $s_c$ to the propulsion unit 9.

Returning to the stabilising device 1 of the present invention, according to a variant of the present invention, the stabilising arm 6 is telescopic. More specifically, the longitudinal section 60 in the first embodiment is telescopic, or the first section 63 and/or the second section 62 in the second embodiment described above is telescopic. In this case, the stabilising device 1 of the invention also comprises suitable actuator devices, not shown in the Figures, operatively connected to the control and data processing unit 8, configured to receive control signals $s_c$ from the latter and, as a response, reciprocally move the telescopic elements of the stabilising arm 6 to increase or reduce its length, as required. With such a configuration, it is by all means obvious to the person skilled in the art that by varying the length of the stabilising arm 6, it is possible to vary the torque generated by the stabilising arm 6 about the transverse axis y-y of the connecting element 4 and thus balance or contribute to balance the weight of the load 3 and supporting arm 5.

Concerning the supporting arm 6 of the stabilising device 1 of the present invention, it is represented in the Figures according to preferred embodiments thereof. For example, it is represented in Figures 2 and 3 as a single tubular longitudinal section and in Figures 4 and 5 as an assembly of two tubular sections. In any case, the person skilled in the art will have no difficulty in understanding how the stabilising arm can have any other fit-for-purpose configuration. For example, it could be configured as an extensible lattice structure, or it could be made of a profile, or it could be tubular with a polygonal cross-section, e.g. square or rectangular, or it could have any other suitable shape, as long as it is capable of supporting the components of the stabilising device 1 mounted thereon and balancing the load carried on the supporting arm 5.

Regarding the tilting connecting element 4, according to a preferred embodiment of the invention depicted in Figures 4 and 5 this comprises a central pivot 43, arranged along the transverse axis (y-y) and a pair of plates (44, 45), attached on said central pivot 43, parallel to each other. In this case, the load end 41 comprises one plate of the pair, e.g. plate 45, and the stabilising end 42 comprises the other plate 44 of the pair. Suitable openings or through-holes are obtained in these plates, which allow to attach, e.g. by bolts or any other suitable means, the supporting arm 5 of the load 3 and stabilising arm 6 respectively. The tilting connecting element 4 also comprises a pair of connecting brackets (46, 47), each bracket being, on the one hand, pivoted on the central pivot 43 and, on the other hand, configured to be connected to the main body of the drone 2, at the connection seat 21. In the Figures shown, the connecting brackets are directly connected to the drone 2 at its connection seat 21. In any case, when it is necessary to maintain a certain distance between the lower surface 20 of the drone 2 and the tilting connecting element 4, for example in order to avoid that during use the supporting arm 5 of the load 3 may interfere with the propellers of the drone 2, the brackets 46 and 47 may be connected to the drone indirectly, i.e. they may be connected to a free end of a joint rigidly attached to the drone 2 at its connection seat 21, arranged along the vertical axis zo-zo of the drone passing through its centre of gravity (e.g. like the joint 200 shown in Figures 1a and 1b).

The stabilising device 1 of the present invention further comprises, according to a preferred variant, also an I/O unit, operatively connected to the detection unit 7 and the control and data processing unit 8 and configured to transmit outwardly, optionally to the drone 2 or other remote device (not shown in the Figures), at least the detection signal $s_d$ , detected by the detection unit 7. As it will be observed, although the stabilising device 1 is completely autonomous from the drone to which it may be connected, under certain circumstances it may be useful to transfer information between the stabilising arm 6 and the drone 2, more specifically to an attitude control board of the drone 2, for example by radio or cable, while performing an NDT measurement using a measuring instrument 3, when the measuring instrument is in contact with the object to be measured and the control of the attitude of the entire system is required.

The stabilising device 1 described above may thus be advantageously employed to implement a method of controlling the attitude of a load carried by a drone, which is also a specific object of the present invention.

Such a method is advantageously implemented when a drone 2, e.g. of the conventional type, carries a cantilevered load 3 (as explained above) along a space horizontal direction and wherein the above-described stabilising device 1 is connected to the drone 2, which additionally supports, at the tilting connecting element 4, a supporting arm 5, with a load 3 attached to the free end 51 of the supporting arm 5. Such a method comprises an initial step wherein, by means of the detection unit 7, the attitude of the stabilising arm 6 is detected and at least a corresponding detection signal $s_d$ is output. Thus, the method comprises a subsequent step wherein the at least one detection signal $s_d$ is received via the control and data processing unit 8, processed for example as described above, and a corresponding at least one control signal $s_c$ is output to control the attitude of the stabilising arm 6, and thus also of the load 3 attached thereto, via the tilting connecting element 4 and the supporting arm 5. Subsequently, the method comprises a step wherein the propulsion unit 9 receives the control $s_c$ signal and generates or modifies, on the basis of the control signal $s_c$ received, a corresponding propulsive force $\overrightarrow{F_p}$ which helps to control the attitude of the stabilising arm 6 and, as mentioned above, also of the load 3 attached thereto, by means of the tilting connecting element 4 and the supporting arm 5.

More specifically, to generate or vary the $\overrightarrow{F_p}$ propulsive force produced by the propulsion unit 9, according to the method of the invention, it is possible to:

-    vary the angular position of the propulsion unit 9 relative to the longitudinal section 60, when the stabilising arm 6 is configured according to the first embodiment described above (i.e. it is possible to control a rotation of the propulsion unit 9 about its pivot axis parallel to the axis y-y of the tilting connecting element 4), or
-    vary the mutual position of the second section 64 of the stabilising arm 6 relative to the first section 63 and/or the angular position of the propulsion unit 9 relative to the second section 64, when the stabilising arm 6 is configured according to the second embodiment described above.

Alternatively or additionally, the power developed by the propulsion unit 9 may also be varied via its drive units 91.

According to another preferred embodiment, when the stabilising device 1 is provided with a telescopic stabilising arm 6 and corresponding actuator devices, the method of the invention further comprises a step wherein the actuator devices receive as input at least one control signal $s_c$ output by the control and data processing unit 8 and, based on the received signal, vary the length of the stabilising arm 6.

In light of the above, the advantages offered by the present invention are obvious. Firstly, thanks to the tilting connecting element 4, the impact of the inertia of the assembly formed by the supporting arm 5, load 3, connecting element 4 and stabilising arm 6 on the drone 2 is reduced, consequently avoiding or greatly reducing triggering the pendulum movement of the system, caused by the attitude control system of the drone 2, thus resulting in improved drone manoeuvrability and, in case the supported load 3 is a measuring instrument, in a reduction in the difficulty of using the measuring instrument itself.

Furthermore, thanks to the stabilising arm 6 described above, when the drone needs to keep the measuring instrument in contact with the object to be measured, and therefore needs to exert pressure on this object by moving towards it, the drone 2 will only have to maintain its position close to the object to be measured. The pressure to be exerted on the object will be developed by means of a suitable control signal sent to the propulsion unit 9, which, based on its position and the power developed, will be able to generate a propulsive force $\overrightarrow{F_p}$ with a desired horizontal component, sufficient to exert the pressure required to perform the measurement on the object. In Figure 3 it can in fact be observed that the propulsion unit 9, while rotating about its own transverse pivot axis, which is parallel to the pivot axis y-y of the tilting connecting element 4, may also exert a force from the horizontal component $\overrightarrow{F_{px}}$. Besides, the stabilising arm 6 of the present invention may be easily mounted by means of the tilting connecting element 4 or by means of a vertical joint suitable for a drone 2 of the conventional type, and thanks to the propulsion unit 9 and the fact that it is optionally telescopic, it may stabilise any type of load 3 by connecting it to a respective supporting arm 5, which in turn is attached to the tilting connecting element 4.

The preferred embodiments and possible variants of the present invention have been outlined above, but it is to be understood that the persons skilled in the art may make modifications and changes without departing from the scope of protection, as defined in the attached claims.

**Claims**

1. A device (1) for stabilising the attitude of a load (3) carried by a drone (2) along a space horizontal axis (x-x), the drone having a lower surface (20) wherein a connection seat (21) is obtained at a drone vertical axis (zo-zo) passing through its centre of gravity, the stabilising device (1) comprising:

   - a tilting connecting element (4), configured to tilt about its own transverse axis (y-y), having a load end (41) and a stabilising end (42), opposite the load end (41), and configured:

     to be connected to the drone at the drone (2) connection seat (21), and to be arranged in a tilting plane (P), passing through the space horizontal axis (x-x) and the vertical axis ($z_0$-$z_0$) of the drone, with its transverse axis (y-y) orthogonal to the tilting plane (P); and
     to be rigidly attached, at its load end (41), to a corresponding attachment end (52) of a load (3) supporting arm (5), also arranged along the tilting plane (P), the load (3) being mounted on the load supporting arm (5) at the free end (51) of the load supporting arm (5); and

   - a stabilising arm (6), rigidly attached to the tilting connecting element (4) at its stabilising end (42), arranged in the tilting plane (P) and configured to balance the weight of the supporting arm (5) and the load (3);

   whereby, when the stabilising device (1) is connected to the drone 2, and is also connected to the load (3) by means of the supporting arm (5), and the drone moves forward along the horizontal axis (x-x) and varies its attitude by making a rotation about its own pitch axis ($y_0$-$y_0$), the tilting connecting element (4) rotates about its own transverse axis (y-y) by a corresponding angle while maintaining substantially unchanged the attitude of the stabilising arm (6) and thus also of the load (3) attached thereto, by means of the tilting connecting element (4) and the supporting arm (5).

2. The stabilising device (1) according to claim 1, comprising:

   - a detection unit (7), mounted on the stabilising arm (6) and configured to detect the attitude of the stabilising arm (6) and output at least one detection signal $s_d$;
   - at least a control and data processing unit (8), mounted on the stabilising arm (6) and operatively connected to the detection unit (7), the control and data processing unit (8) being configured to receive and process the at least one detection signal $s_d$ and to output at least one control signal $s_c$ for controlling the set-up of the assembly formed by the supporting arm (5), load (3), tilting connecting element (4) and stabilising arm (6);
   - at least one propulsion unit (9), mounted on the at least one stabilising arm (6) and operatively connected to the at least one control and data processing unit (8), the propulsion unit (9) being configured to receive as input the at least one control signal $s_c$ and to generate a corresponding propulsive force ($\overrightarrow{F_p}$) which helps to control the attitude of the stabilising arm (6) and thus of the assembly formed by the supporting arm (5), load (3), tilting connecting element (4) and stabilising arm (6).

3. The stabilising device (1) according to claim 2, wherein the stabilising arm (6) comprises a longitudinal section (60), on which the detection unit (7) and the control and data processing unit (8) are mounted, the longitudinal section (60) having a first end (61) attached to the stabilising end (42) of the tilting connecting element (4), and a second end (62), on which the propulsion unit (9) is mounted by means of an articulated joint, the propulsion unit (9) being pivoted at least about a pivot axis parallel to the transverse axis (y-y) of the tilting connection element (4).

4. The stabilising device (1) according to claim 2, wherein the stabilising arm (6) comprises:

- a first section (63) having a first (61) end and a second (632) end, the first section (63) being attached to the stabilising end (42) of the tilting connecting element (4), at its first end (61), and supporting the detection unit (7) and the control and data processing unit (8); and
- a second section (64), having a first end (641) and a second end (62), the second (64) section being articulated on the second end (632) of the first section (63), at its first end (641), and configured to move relative to the first section (63) according to at least one degree of freedom optionally pivoted about a pivot axis parallel to the transverse axis (y-y) of the tilting connection element (4) and supporting the propulsion unit (9) at its second end (62).

5. The stabilising device (1) according to any one of claims 2 to 4, wherein the propulsion unit (9) comprises at least one drive unit (91) and at least one propeller thruster (92) connected to the at least one drive unit (91), the at least one drive unit (91) being configured to rotate the propeller thruster (92), in response to the control signal $s_c$ transmitted by the control and data processing unit (8).

6. The stabilising device (1) according to any one of the preceding claims, wherein the stabilising arm (6) is telescopic and the stabilising device 1 of the invention also comprises suitable actuator devices, operatively connected to the control and data processing unit (8) and configured to receive control signals $s_c$ output by it and, in response, reciprocally move the telescopic elements of the stabilising arm (6) to increase or decrease the length thereof.

7. The stabilising device (1) according to anyone of the preceding claims, wherein the tilting connecting element (4) comprises:

- a central pivot (43), arranged along the transverse axis (y-y);
- a pair of plates (44, 45), attached about said central pivot (43), arranged parallel to each other, the load end (41) comprising one plate (45) of the pair of plates and the stabilising end (42) comprising the other plate (44) of the pair of plates; and
- a pair of connecting brackets (46, 47), each bracket being pivoted on one side to the central pivot (43) and, on the other side, configured to be directly or indirectly connected to the drone (2), at the connection seat (21).

8. The stabilising device (1) according to any one of the preceding claims, comprising an I/O unit, operatively connected to the detection unit (7) and the control and data processing unit (8) and configured to transmit outwardly, optionally to the drone (2) or other remote device, at least the detection signal $s_d$, detected by the detection unit (7).

9. A method for controlling the attitude of a load (3) carried as cantilevered by a drone (2) along a space horizontal axis (x-x), wherein the drone comprises a lower surface (20) wherein a connection seat (21) is formed, at a vertical axis ($z_0$-$z_0$) of the drone (2) passing through its centre of gravity, wherein the drone (2) is further connected to a stabilising device (1) according to any one of the preceding claims, and wherein the stabilising device (1) also carries, at the tilting connecting element (4), a load supporting arm (5) rigidly attached thereto and the load (3), mounted on the free end of the load supporting arm (5), the method comprising:

- detecting, by means of the detection unit (7), the attitude of the stabilising arm (6) and output at least one detection signal $s_d$;
- receiving, from the control and data processing unit (8), the at least one detection signal $s_d$, processing that signal and outputting at least one attitude control signal $s_c$ of the stabilising arm (6) and of the assembly formed by supporting arm (5), load (3), tilting connecting element (4) and stabilising arm (6);
- receiving as input, from the propulsion unit (9), the at least one control signal $s_c$ and generating or varying, on the basis of this at least one control signal $s_c$ received, a corresponding propulsive force ($\overrightarrow{F_p}$) which contributes to control the attitude of the stabilising arm (6) and thus also of the load (3) attached thereto, by means of the tilting connecting element (4) and the supporting arm (5).

**10.** The method according to the preceding claim, wherein generating or varying the propulsive force ($\overrightarrow{F_p}$) includes:

- varying the angular position of the propulsion unit (9), about its pivot axis, parallel to the transverse axis (y-y) of the tilting connecting element (4); and/or
- varying the power developed by the propulsion unit (9).

**11.** The method according to claim 9 or 10, when the stabilising device (1) is made according to claim 6, further comprising receiving as input, from the actuator devices, the at least one control signal $s_c$ and, on the basis of said at least one control signal $s_c$ received, varying the length of the stabilising arm (6).

(PRIOR ART)

**Fig. 1a**

(PRIOR ART)

**Fig. 1b**

**Fig. 2**

**Fig. 3**

**Fig. 4**

**Fig. 5**

**Fig. 6**

Europäisches
Patentamt

European
Patent Office

Office européen
des brevets

## EUROPEAN SEARCH REPORT

Application Number

EP 22 20 4510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2021/232141 A1 (GEORGESON GARY E [US] ET AL) 29 July 2021 (2021-07-29)<br>* figures 3A, 3B *<br>* paragraph [0054] *<br>----- | 1,6,8<br><br>2-5,7,<br>9-11 | INV.<br>G05D1/00<br>F16M11/00<br>B64C39/02 |
| A | US 2019/118937 A1 (SUGAYA SHUNJI [JP]) 25 April 2019 (2019-04-25)<br>* figure 1 *<br>* paragraphs [0035] - [0051] *<br>----- | 1-11 | |
| A | WO 2022/137227 A1 (GUY ITAY ELIAHU [IL]) 30 June 2022 (2022-06-30)<br>* figures 5, 7, 10 *<br>----- | 1-11 | |
| A | US 2020/011758 A1 (LIU ANSHUO [US] ET AL) 9 January 2020 (2020-01-09)<br>* figures 1B, 1C *<br>* paragraphs [0008], [0017] *<br>----- | 1-11 | |
| A | US 11 036 228 B2 (SZ DJI TECHNOLOGY CO LTD [CN]) 15 June 2021 (2021-06-15)<br>* Figures 1, 5, 6, 9 and the description thereof *<br>----- | 1-11 | TECHNICAL FIELDS SEARCHED (IPC)<br><br>G05D<br>B64C<br>F16M |
| A | CN 111 319 765 A (SUINING CHANGFENG MECHANICAL TECHNOLOGY CO LTD) 23 June 2020 (2020-06-23)<br>* figures 3-5 *<br>----- | 1,6,9,11 | |

The present search report has been drawn up for all claims

| Place of search | Date of completion of the search | Examiner |
|---|---|---|
| Munich | 13 March 2023 | Schwarzenberger, T |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 20 4510

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2023

| Patent document cited in search report | | Publication date | Patent family member(s) | | Publication date |
|---|---|---|---|---|---|
| US 2021232141 | A1 | 29-07-2021 | CN | 113182936 A | 30-07-2021 |
| | | | EP | 3858732 A1 | 04-08-2021 |
| | | | JP | 2021121531 A | 26-08-2021 |
| | | | SG | 10202010860U A | 30-08-2021 |
| | | | US | 2021232141 A1 | 29-07-2021 |
| US 2019118937 | A1 | 25-04-2019 | JP | 6105181 B1 | 29-03-2017 |
| | | | JP | WO2018003080 A1 | 28-06-2018 |
| | | | US | 2019118937 A1 | 25-04-2019 |
| | | | WO | 2018003080 A1 | 04-01-2018 |
| WO 2022137227 | A1 | 30-06-2022 | IL | 279694 A | 01-07-2022 |
| | | | WO | 2022137227 A1 | 30-06-2022 |
| US 2020011758 | A1 | 09-01-2020 | US | 2019039721 A1 | 07-02-2019 |
| | | | US | 2020011758 A1 | 09-01-2020 |
| US 11036228 | B2 | 15-06-2021 | EP | 3500494 A1 | 26-06-2019 |
| | | | US | 2019113922 A1 | 18-04-2019 |
| | | | US | 2021302963 A1 | 30-09-2021 |
| | | | WO | 2018107330 A1 | 21-06-2018 |
| CN 111319765 | A | 23-06-2020 | NONE | | |

EPO FORM P0459

For more details about this annex : see Official Journal of the European Patent Office, No. 12/82